(19) Europäisches Patentamt
European Patent Office
Office européen des brevets

(11) Publication number: 0 203 776
A2

(12) EUROPEAN PATENT APPLICATION

(21) Application number: 86303853.5

(22) Date of filing: 21.05.86

(51) Int. Cl.4: G 01 K 3/04, G 01 K 11/16

(30) Priority: 24.05.85 JP 110297/85
19.09.85 JP 205375/85
14.10.85 JP 227041/85

(43) Date of publication of application: 03.12.86
Bulletin 86/49

(84) Designated Contracting States: CH DE FR GB LI

(71) Applicant: MITSUI TOATSU CHEMICALS, INCORPORATED, 2-5 Kasumigaseki 3-chome, Chiyoda-Ku Tokyo 100 (JP)

(72) Inventor: Tsutsumi, Haruki, 669, Kajigaya-cho Totsuka-ku, Yokohama-shi Kanagawa-ken (JP)
Inventor: Hirayama, Nobuhiro, 2882-2-35, Iijima-cho Totsuka-ku, Yokohama-shi Kanagawa-ken (JP)
Inventor: Asano, Makoto, 4-19-306, Wakabadai Asahi-ku, Yokohama-shi Kanagawa-ken (JP)
Inventor: Yamaguchi, Takamine, 443-1, Kitada Nakai-machi, Ashigarakami-gun Kanagawa-ken (JP)
Inventor: Akahori, Hiroyuki, 47, Oppaminami-cho 2-chome, Yokosuka-shi Kanagawa-ken (JP)

(74) Representative: Stuart, Ian Alexander et al, MEWBURN ELLIS & CO. 2/3 Cursitor Street, London EC4A 1BQ (GB)

(54) **Coloring-time controlling layer.**

(57) Disclosed herein is a coloring-time controlling layer suitable for use in a temperature-control indicator unit. The coloring-time controlling layer is composed of a film obtained by drying an emulsion of a polymer containing styrene and/or acrylonitrile as constituent unit(s) and interposed between [A] a layer containing microcapsules of an oily substance and [B] another layer containing a substance capable of inducing coloring upon contact with the oily substance. In a preferred embodiment, the coloring-time controlling layer is used for a temperature-control indicator unit comprising microcapsules containing a hydrophobic organic compound having a desired melting point, a methine-type dyestuff precursor and an oxidizing substance.

EP 0 203 776 A2

86303875

0203776



COLORING-TIME CONTROLLING LAYER

This invention relates to a coloring-time controlling layer which may be suitable for use in a temperature-control indicator unit, and particularly to a coloring-time controlling layer to be interposed between [A] a layer containing microcapsules of a liquid substance and [B] another layer containing a substance capable of inducing coloring upon contact with the component in the microcapsules; and adapted to control the time required for the liquid substance to flow out of the microcapsule, to reach the layer [B] and then to induce the coloring upon rupture of the microcapsules. The coloring-time controlling layer is useful for controlling the coloring time of a temperature-control indicator label or tag for a material, produce or article requiring strict temperature control, such as cold-storage or frozen foods.

For materials, produces and articles requiring temperature control, it has conventionally been desired

to develop storage-temperature control labels or tags the colors of which change irreversibly upon exposure to temperature exceeding their respective predetermined temperatures. Among materials, produces and articles requiring temperature control, there are, for example, frozen foods, cold-storage foods, natural flowers, pharmaceutical products, etc. No effective means have however been found to date for detecting whether they have been maintained at their respective specified temperatures during their storage or transportation. Although strict temperature control is indispensable for materials, produces and articles led by frozen and cold-storage foods, it is difficult to know whether they have been stored under required temperature control after their production until their delivery to users. There is thus an outstanding demand for the development of specific temperature control systems in related business fields.

One of the present inventors and his co-workers previously conducted an extensive research in order to solve the above-mentioned problems and as a result, proposed an extremely characteristic and effective unit making use of an irreversible color production system, which employed a methine-type dyestuff precursor and an oxidizing substance, in a temperature indicator unit

(PCT International Publication WO85/01105). This unit uses, as essential components thereof, (1) a hydrophobic organic substance having a desired melting point, (2) a methine-type dyestuff precursor and (3) an oxidizing substance represented by a benzoquinone derivative. The temperature control label making use of the temperature control unit includes microcapsules of the organic substance (1), the precursor (2) and oxidizing substance (3), or microcapsules of a solution of the precursor (2) in the organic substance (1) and the oxidizing substance (3) as essential components on a base material.

Although such units are extremely effective in effecting strict temperature control, they are still accompanied by the following problems in actual distribution routes. Taking the storage of foods by way of example, its putrefaction or change of quality takes place due to propagation of sundry bacteria or the like if it is exposed to temperatures above its specified storage temperature in the course of its storage. Indicators (labels or tags) which are employed to permit easy detection of such a temperature history are generally adhered on the surfaces of wrapping or packaging materials made of a polymer material or the like in which foods, for example, meat or fish is wrapped or packaged. Although the

indicators are exposed immediately to the temperature of the storage environment, the meat, fish or the like does not immediately follow the temperature of the environment but follows it with a time lag because of its own specific heat or the heat-shielding effect of the wrapping packages. Even if food follows the temperature of its environment, it does not immediately undergo putrefaction or change of quality to such an extent that it is no longer edible. Foods have their own specific storage periods during which they still remain edible. Cold-storage foods specified under the law, which are required to be stored at temperatures below 10°C under control, do not become inedible even when they are exposed to an environment above 10°C for a time period as short as about 5 minutes to about 30 minutes. It is therefore impossible to use units, which produce their colors upon exposure to a temperature above the specified storage temperature even for a short period of time, as indicators such as those mentioned above. It has thus been desired to develop a system which allows to control the time until coloring in accordance with the objective of its use, namely, detection of putrefaction, change of quality or the like of each material, produce or article.

An object of this invention is to provide a coloring-time controlling layer which makes use of a film of a specific polymer and permits control of the coloring time of a temperature control unit.

In one aspect of this invention, there is thus provided a coloring-time controlling layer suitable for application between [A] a layer containing microcapsules of an oily substance and [B] another layer containing a substance capable of inducing coloring upon contact with the oily substance, characterized in that said coloring-time controlling layer comprises a film obtained by drying an emulsion of a polymer which contains styrene and/or acrylonitrile as constituent unit(s).

Preferred embodiments make it possible to control the coloring time of a temperature-control indicator unit.

The above and other objects, features and advantages of the present invention will become apparent from the following description and the appended claims.

The polymer useful in the coloring-time controlling layer of this invention contains styrene and/or acrylonitrile as its constituent unit(s). As

the proportion of styrene becomes greater, the time required until occurrence of coloring becomes shorter. As the proportion of acrylonitrile increases, it becomes longer. By suitably choosing the amount(s) of one or both of these components, it is possible to provide a coloring-time controlling layer which can adjust the coloring time of the associated temperature-control indicator unit to a level suited for each material, produce or article requiring temperature control. For achieving coloring time as short as 5 - 30 minutes or so, for example, when a temperature-control indicator unit is applied to a certain specific pharmaceutical product or catalyst, it is preferred to use a polymer which does not contain acrylonitrile but contains styrene, especially, a polymer containing 30 mole % or more of styrene. When a temperature-control indicator unit is applied to a material, produce or article the quality of which is not altered unless it is exposed to unauthorized temperatures for a relatively long period of time, for example, over 1 hour or 10 hours, it is preferred to use a polymer which does not contain styrene but contains acrylonitrile, especially, a polymer containing 30 mole % or more acrylonitrile. Needless to say, a polymer containing both styrene and acrylonitrile can also be used depending on the quality or nature of a material,

produce or article to which a temperature-control indicator unit is applied.

When the polymer emulsion is a mixture of an emulsion of a polymer containing acrylonitrile and another emulsion of a polymer containing styrene, the coloring time can be readily adjusted by making a suitable selection as to their mixing ratio. Therefore, such a mixture is preferable. The mixing ratio of an emulsion of an acrylonitrile-containing polymer and another emulsion of a styrene-polymer may generally be 99:1 - 1:99 or more preferably 95:5 - 5:95, both, in terms of weight ratio of solids. In this case, the polymers may preferably contain 30 mole % or more of acrylonitrile or styrene.

The polymer emulsion useful in the practice of this invention may be obtained by subjecting styrene and/or acrylonitrile and if necessary, one or more other copolymerizable monomers to emulsion polymerization, or most generally, to emulsion polymerization in the presence of a redox catalyst in an aqueous medium.

As other copolymerizable monomers, may be mentioned ethylenically-unsaturated carboxylic acids such as acrylic acid, methacrylic acid, itaconic acid, maleic acid, fumaric acid and crotonic acid; aromatic vinyl compounds such as α-methylstyrene, vinyl toluene and divinyl benzene; alkyl acrylates and methacrylates

such as methyl acrylate, ethyl acrylate, butyl acrylate, 2-ethylhexyl acrylate, methyl methacrylate, ethyl methacrylate, butyl methacrylate and 2-ethylhexyl methacrylate; hydroxyalkyl acrylates and methacrylates such as hydroxyethyl acrylate and hydroxyethyl methacrylate; acrylamide, methacrylamide and their derivatives such as acrylamide, methacrylamide, N-methylol acrylamide and N-methylol methacrylamide; and a variety of monomer components such as diacetone acrylamide, vinylpyrrolidone, glycidyl acrylate, glycidyl methacrylate, vinyl acetate, vinyl chloride, vinylidene chloride and methacrylonitrile. In addition to the above-mentioned nonionic and anionic monomers, may also be mentioned cationic vinyl monomers such as trimetylaminoethyl methacrylate, dimethylaminoethyl methacrylate, diethylaminoethyl methacrylate and triethylaminoethyl methacrylate. Of these, alkyl acrylates and methacrylates are preferred with butyl acrylate, 2-ethylhexyl acrylate, methyl acrylate and methyl methacrylate being particularly preferred.

Needless to say, polymer components useful in the practice of this invention are not necessarily limited to the above-exemplified compounds. Various multi-component copolymers of 3 or more monomers may of course be employed successfully. It is also within the

breadth of the present invention to use two or more copolymers in combination.

Two or more of these monomers may be copolymerized after mixing them in advance. As an alternative, such monomers may be added one after another to subject them to block copolymerization. As a further alternative, they may be subjected graft copolymerization. Where a water-soluble monomer is employed, it may be added beforehand to an emulsion of a homopolymer or copolymer of styrene and/or acrylonitrile, followed by its polymerization with the homopolymer or copolymer.

A preferred emulsion useful in the practice of this invention is an aqueous white suspension of fine particles the average particle size of which is 0.01 - 2.0 µm or preferably 0.05 - 0.8 µm. It is of such nature that when it is dried by evaporation of water, its polymer particles undergo cohesion to form a uniform film.

The polymer emulsion is a composition serving as a principal component of a coloring-time controlling layer provided between a layer of microcapsules of an oily substance and another layer of a color-developing agent. It must thus have such properties that the swelling, spreading, penetration and the like of the oily substance are controlled. Incidentally, films of

resins which have great barrier effects only do not permit penetration of the oily substance by themselves. Such resins are therefore unsuitable for coloring-time controlling layers according to this invention. On the other hand, films of resins which have excessively small barrier effects permit free penetration of the oily substance. They are hence unsuitable for coloring-time controlling layers. As conditions for a resin useful to form a coloring-time controlling layer required in the present invention, it must have a suitable degree of barrier property and a suitable degree of penetrability in combination. Films obtained from the above-mentioned polymer emulsions are all suitable for such a purpose.

The thus-obtained emulsions are used either singly or in combination. They are then dried to form films, which are useful as coloring-time controlling layers according to the present invention.

A polymer emulsion useful in the practice of this invention may be provided on a base material by a coating technique or the like. Upon its drying into a film, a coloring-time controlling layer is obtained. In order to obtain a continuous film effectively by providing a layer of a polymer emulsion by a coating or printing technique and then drying it under routine drying conditions, it is preferable to use a polymer

the glass transition point ($T_g$) of which is above -55°C but below 80°C or preferably above -50°C but below 60°C.

In the actual application of the coloring-time controlling layer according to this invention, it is provided between the layer [A], which is provided on a base material and contains microcapsules of the oily substance, and the layer [B] which contains the substance capable of inducing coloring upon contact with the component in the microcapsules. As the base material, a film-like material having flexibility such as paper or a polymer is used generally. On the upper surface of the film-like material, the layer [A] or [B] is provided usually by any one of various coating techniques, for example, air knife coating, bar coating, blade coating, gravure coating, roll coating or the like, or by any one of printing techniques, for example, gravure printing, flexographic printing, offset printing, screen printing or the like. A coloring-time controlling layer according to the present invention is then provided on the upper surface of the layer [A] or [B]. A coating technique is usually employed for this purpose. Since the emulsion is provided as an aqueous emulsion having a low viscosity, a coating technique suitable for the application of low-viscosity coating formulations such

as air knife coating or bar coating is preferably used in general. The coloring-time controlling layer of this invention is an extremely thin continuous film having a dry thickness of about 0.01 - 20 μm or preferably about 0.05 - 10μm. It is generally provided by applying the polymer emulsion in accordance with any one of the above-mentioned coating techniques and then heating it to a temperature sufficient to dry it into a continuous film. Further, the layer [B] or [A] is provided on the upper surface of the coloring-time controlling layer. It is also provided by a coating or printing technique.

Label-like products provided with coloring-time controlling layers of this invention are required to develop a color in the form of characters or picture patterns upon exposure to unauthorized temperatures for a controlled coloring time or longer. When a printing technique is applied, especially, microcapsules are printed, it is inconvenient to use any printing technique which has a potential danger of microcapsule rupture by a pressure. The screen printing technique is employed most preferably.

Illustrative of the coloring-inducing means useful in the practice of this invention may be (a) a color production system of a methine-type dyestuff precursor and an oxidizing material, for example, a

benzoquinone derivative, such as that proposed in PCT International Publication WO85/01105 and (b) another color production system of one of various known phthalide derivatives and an organic or inorganic solid acid. The color production system (a) is practically irreversible and is hence employed preferably.

Methine-type dyestuff precursors, which can be used preferably in the practice of this invention, are represented by the following general formula (I):

$$\begin{array}{c} Y \\ | \\ X\text{-}CH\text{-}Z \end{array} \qquad (I)$$

wherein X, Y and Z mean individually a substituted or unsubstituted phenyl group, a substituted or unsubstituted naphthyl group, a substituted or unsubstituted ß-styryl group or a substituted or unsubstituted heteryl group and may be either different or the same, and two of the substituents X, Y and X may be coupled together to form a ring. As specific examples, triphenylmethane-type leuco compounds, xanthene-type leuco compounds, diindolylmethane leuco compounds and the like are mentioned by way of example.

As exemplary oxidizing substances usable preferably in the present invention, may be mentioned color-developing agents each of which can oxidize the methine-type dyestuff precursor to form a colored dyestuff upon molecular contact with the methine-type

dyestuff precursor. As specific examples of such color-developing agents, may be mentioned benzoquinone derivatives each of which has been substituted by one or more electron-attracting groups.

Upon practice of the present invention, one of these color-producing components may, for example, be dissolved in a hydrophobic organic compound having a melting point slightly higher than a temperature below which a material, produce or article must be maintained, thereby forming said one of the color-producing components into an oily solution. This oily solution is then microencapsulated by a process known per se in the art and the resultant microcapsules are thereafter incorporated in the layer [A]. The other color-producing component is incorporated in the layer [B] on the other hand. Alternatively, the hydrophobic organic compound may be microencapsulated to be incorporated in the layer [A] and both the color-producing components may be incorporated in the layer [B]. These procedures may also be applied in modified forms. Various hydrophobic organic compounds may be used depending on what end use will be made. As non-volatile hydrophobic organic compounds having sharp melting points within a range of -30°C to +50°C, may be mentioned n-butyl n-capriate, ethyl n-capriate, n-dodecyl acetate, ethyl n-undecanoate, n-decylbenzene,

undecyl caproate, heptyl capriate, n-butyl laurate, n-butyl myristate, n-dodecylbenzene, methyl laurate, ethyl myristate, isobutyl palmitate, n-butyl palmitate, methyl myristate and so on.

The layers [A] and [B] may usually contain, besides the above-described microcapsules and coloring-inducing substance, a natural or synthetic high-molecular binder, a solvent, and an inorganic or organic filler in order to improve their coating or printing properties.

A temperature indicator label equipped with a coloring-time controlling layer of this invention is applied with a roll pressure, impact pressure or the like upon its application (the activation of its temperature-controlling function), thereby causing its microcapsules to rupture. When the temperature exceeds the specified temperature, the content of the microcapsules are caused to melt and after passing through the coloring-time controlling layer of this invention by dissolution, penetration, spreading and the like, the coloring of the temperature indicator label begins. The time required for the initiation of the coloring varies depending on the viscosity, polarity, molecular weight and the like of the oily substance in the microcapsules. The type of a monomer or the types and proportions of monomers and the

particle size and molecular weight of the resultant polymer in each coloring-time controlling layer as well as the coating thickness of the coloring-time controlling layer are changed in accordance with the time desired until the initiation of coloring.

[Examples]

The invention will hereinafter be described further by the following Synthesis Examples and Examples, in which all designations of "%" and "part" or "parts" mean wt.% and part or parts by weight unless otherwise specified.

Synthesis Example 1:

Samples [I] - [VI] were separately prepared in the following manner.

A stirrer was provided with a 1-ℓ round bottom flask fitted with a heating device. The flask was then charged with 539 g of water and 10 g of *sodium dodecylbenzenesulfonate, followed by further addition of 1 g of potassium persulfate and 0.5 g of sodium hydrogensulfite as polymerization catalysts. After heating the contents to 50°C with gentle stirring, a mixture of 210 g of acrylonitrile monomer, 225 g of butyl acrylate monomer, 10 g of acrylic acid monomer and 6 g of acrylamide was added at a rate of 5 g per minute by using a charging pump. Eight hours after the charging

of the monomers, 998 g of a cloudy emulsion of the resultant acrylic resin (average particle size: 0.2 μm) was obtained. The emulsion had a thickness of 45% and acrylonitrile accounted for 66 mole % of all the monomers. The emulsion will hereinafter be designated as "Sample [I]".

Synthesis Example 2:

By using a reactor similar to that employed in Synthesis Example 1, 530 g of water and 5 g of sodium dodecylbenzenesulfonate were added, followed by further addition of 0.8 g of ammonium persulfate and 0.4 g of sodium hydrogensulfite as polymerization catalysts. After heating the contents to 60°C, a mixture of 66 g of acrylonitrile monomer, 160 g of butyl acrylate, 229 g of 2-ethylhexyl acrylate, 8.9 g of acrylamide and 6.5 g of acrylic acid was added at a rate of 10 g per minute by means of a charging pump. Upon an elapsed time of 5 hours after the charging of the monomers, 996 g of a cloudy suspension of the resultant acrylic resin (average particle size: 0.15 μm) was obtained. The emulsion had a thickness of 47% and acrylonitrile accounted for 31 mole % of all the monomers. The emulsion will hereinafter be designated as "Sample [II]". The glass transition point ($T_g$) of the resultant acrylic resin was - 46.7°C.

Synthesis Example 3:

By using a reactor similar to that employed in Synthesis Example 1, 560 g of water and 8 g of sodium dodecylbenzenesulfonate were added, followed by further addition of 0.9 g of ammonium persulfate and 0.45 g of sodium hydrogensulfite as polymerization catalysts. After heating the contents to 55°C, a mixture of 170.5 g of acrylonitrile monomer, 118.2 g of styrene monomer, 145.5 g of butyl acrylate and 5.9 g of acrylic acid was added at a rate of 5 g per minute by means of a charging pump. Upon an elapsed time of 7 hours after the charging of the monomers, 998 g of a cloudy suspension of the resultant acrylic resin (average particle size: 0.3 μm) was obtained. The emulsion had a thickness of 44%, and acrylonitrile and styrene accounted for 57 mole % and 20 mole % of all the monomers respectively. The emulsion will hereinafter be designated as "Sample [III]". The $T_g$ of the resultant acrylic resin was 31.6°C.

Synthesis Example 4:

In a 200-mℓ stainless steel beaker, 100 g of a 10% polyvinyl alcohol was charged. One gram of 2,5-din-butoxycarbonyl-3,6-diphenylsulfonyl-1,4-benzoquinone was added further. The contents were then stirred at at a high speed (1,000 rpm) for 3 hours to pulverize the resultant resin, thereby obtaining a dispersion of the color-developing agent.

In a separate vessel, 50 g of water, 20 g of calcium carbonate and 20 g of a 10% starch solution were charged, followed by an addition of 10 g of the dispersion of the color-developing agent. They were then stirred and mixed together to obtain a coating formulation having a solid content of 23% and viscosity of 150 cps. The emulsion will hereinafter be designated as "Sample [IV]".

Synthesis Example 5:

Droplets of ethyl myristate (melting point: 10°C) with 2% of 4,4'-bis-dimethylamino-3"-methyl-4"-ethoxy-triphenylmethane dissolved therein were coated by melamine resin walls by the conventionally-known in-situ polymerization process, thereby obtaining a slurry of microcapsules (average particle size: 4.0 μ; solid content: 50%). One hundred parts of the microcapsule slurry, 20 parts of a styrene-butadiene latex and 100 parts of water were mixed together to obtain a microcapsule-containing coating formulation. The coating formulation will hereinafter be designated as "Sample[V]".

Synthesis Example 6:

By using a reactor similar to that employed in Synthesis Example 1, 409 g of water and 8 g of sodium dodecylbenzenesulfonate were added, followed by further addition of 1.0 g of ammonium persulfate and 0.5 g of

sodium hydrogensulfite as polymerization catalysts. After heating the contents to 55°C, a mixture of 25.7 g of acrylonitrile monomer, 161.0 g of styrene monomer, 198.2 g of butyl acrylate and 111.5 g of acrylic acid was added at a rate of 5 g per minute by means of a charging pump. Upon an elapsed time of 8 hours after the charging of the monomers, 996 g of a cloudy suspension of the resultant acrylic resin was obtained. The emulsion had a thickness of 49.6%, and acrylonitrile and styrene accounted for 9.4 mole % and 30.2 mole % of all the monomers respectively. The emulsion will hereinafter be designated as "Sample [VI]". The $T_g$ of the resultant acrylic resin was 18.6°C.

Example 1:

Sample [IV] was coated as a color-developing agent on a general-purpose high-quality paper web (basis weight: 80 $g/m^2$) by a No. 10 coating roll bar to give a solid coat weight of 5 $g/m^2$. After drying the thus-coated paper web at 80°C for 1 minute, a layer of the color-developing agent was obtained.

Sample [I], i.e., the acrylic emulsion was coated by a No. 10 coating roll bar on the layer of the color-developing agent to give a solid coat weight of 2 $g/m^2$. The thus-coated paper web was dried at 80°C for 1 minute.

The microcapsules of Sample [V] were thereafter coated by a No. 10 coating roll bar to give a solid coat weight of 6 $g/m^2$ and the thus-coated paper web was dried at 80°C for 1 minute. By the above procedures, a test sample consisting of 3 layers, i.e., the layer of the color-developing agent, the coloring-time controlling layer and the microcapsule layer was obtained. The resultant test sample will hereinafter be designated as "Test Sample [A]".

Example 2:

Following the procedures of Example 1, the color-developing agent of Sample [IV] was coated and dried, the acrylic emulsion of Sample [II] was coated on the resultant layer of the color-developing agent and was dried, and the microcapsules of Sample [V] were then coated and dried. The resultant test sample will hereinafter be designated as "Test Sample [B]".

Example 3:

Following the procedures of Example 1, the color-developing agent of Sample [IV] was coated and dried, the acrylic emulsion of Sample [III] was coated on the resultant layer of the color-developing agent and was dried, and the microcapsules of Sample [V] were then coated and dried. The resultant test sample will hereinafter be designated as "Test Sample [C]".

Comparative Example 1:

The coating and drying procedures of Example 1 were followed except for the use of a 5% carboxymethyl cellulose. Namely, the 5% carboxymethyl cellulose was coated and dried in place of the acrylic emulsion. The resultant test sample will hereinafter be designated as "Test Sample [D]".

Comparative Example 2:

On a general-purpose high-quality paper web (basis weight: 80 $g/m^2$), the color-developing agent of Sample [IV] was coated by a No. 10 coating roll bar to give a solid coat weight of 5 $g/m^2$. The thus-coated paper web was dried at 80°C for 1 minute to obtain a layer of the color-developing agent. The microcapsules of Sample [V], obtained in Synthesis Example 5, were then coated by a No. 10 coating roll bar on the layer of the color-developing agent to give a solid coat weight of 6 $g/m^2$. The thus-coated microcapsule layer was dried at 80°C for 1 minute. In this Comparative Example, the microcapsule layer is provided directly on the layer of the color-developing agent. The resultant test sample will hereinafter be designated as "Test Sample [E]".

Example 4:

Coating and drying work was carried out in the same manner as in Example 1 except that the acrylic emulsion of Sample [VI] was used in lieu of the acrylic

emulsion of Sample [I]. The resultant test sample will hereinafter be designated as "Test Sample [F]".

A coloring test was conducted on Test Samples [A] through [F] obtained above in Examples 1 - 4 and Comparative Examples 1 - 2.

[Coloring test conditions]

1. Microcapsule rupturing machine:

   Super calender (linear pressure: 100 kg/cm).

2. Microcapsule rupturing temperature:

   Room temperature.

3. Temperature history:

   After rupture of its microcapsules, each Test Sample was left over at room temperature for 5 minutes, and then placed in a freezer of 0°C. After allowing it to stand at 0°C for 2 hours, its temperature was raised to 15°C and thereafter maintained at 15°C.

4. Colorimetry:

   Conducted visually (by checking resulting colors at a desired time interval).

Results of the coloring test are summarized in Table 1.

Table 1 Results of Coloring Test

| Sample symbol | Coloring-time controlling layer | Major composition of polymer in coloring-time controlling layer | Overall dry* coat weight ($g/m^2$) | Coloring behavior |
|---|---|---|---|---|
| A | Sample [I] obtained in Example 1 | Acrylonitrile (66 mole%)<br>Butyl acrylate | 12.8 | Coloring started upon an elapsed time of 15 hours after heated to 15°C. 21 hours later, colored significantly (high optical density). |
| B | Sample [II] obtained in Example 2 | Acrylonitrile (31 mole%)<br>Butyl acrylate<br>2-ethylhexyl acrylate | 13.1 | Coloring started upon an elapsed time of 1 hour after heated to 15°C. 6 hours later, the optical density became high. |
| C | Sample [III] obtained in Example 3 | Acrylonitrile (57 mole%)<br>Styrene (20 mole%)<br>Butyl acrylate | 12.9 | Coloring started upon an elapsed time of 5 hours after heated to 15°C. 8 hours later, colored significantly (high optical density). |
| D | Comp. Ex. 1 | Carboxyl methylcellulose | 13.1 | Coloring took place while left over at 0°C due to dissolution of the coloring-time controlling layer (high optical density). |
| E | Comp. Ex. 2 | No coloring-time controlling layer provided | 11.0 | Subsequent to microcapsule rupture, coloring took place before placing it in the 0°C environment (high optical density). |
| F | Sample [VI] obtained in Example 4 | Acrylonitrile (9.4 mole%)<br>Styrene (30.2 mole%)<br>Butyl acrylate | 12.8 | Coloring started upon an elapsed time of 30 minutes after heated to 15°C. 4 hours later, colored significantly (high optical density). |

* (Layer of color-developing agent + coloring-time controlling layer + microcapsule layer)

Synthesis Example 7:

A stirrer was provided with a 1-ℓ round bottom flask fitted with a heating device. The flask was then charged with 505.2 g of water and 8.0 g of sodium dodecylbenzenesulfonate, followed by further addition of 1.2 g of potassium persulfate and 0.6 g of sodium hydrogensulfite as polymerization catalysts. After heating the contents to 70°C with gentle stirring, a mixture of 247.6 g of styrene, 221.9 g of butyl acrylate monomer, 9.4 g of acrylic acid monomer and 6.2 g of acrylamide was added at a rate of 3 g per minute by using a charging pump. Five hours after the charging of the monomers, 1,000 g of a cloudy emulsion of the resultant acrylic resin (average particle size: 0.48 μm) was obtained. The emulsion had a thickness of 48.5% and styrene accounted for 55 mole % of all the monomers. The emulsion will hereinafter be designated as "Sample [VII]". The $T_g$ of the resultant acrylic resin was 8.9°C.

Synthesis Example 8:

By using a reactor similar to that employed in Synthesis Example 7, 524.5 g of water and 9.0 g of sodium dodecylbenzenesulfonate were added, followed by further addition of 1.0 g of ammonium persulfate and 0.5 g of sodium hydrogensulfite as polymerization catalysts. After heating the contents to 70°C, a

mixture of 199.4 g of styrene monomer, 251.0 g of butyl acrylate, 5.9 g of acrylic acid and 8.7 g of acrylamide was added at a rate of 5 g per minute by means of a charging pump. Upon an elapsed time of 7 hours after the charging of the monomers, 1,000 of a cloudy suspension of the resultant acrylic resin (average particle size: 0.37 μm) was obtained. The emulsion had a thickness of 46.5% and styrene accounted for 47 mole % of all the monomers. The emulsion will hereinafter be designated as "Sample [VIII]". The $T_g$ of the resultant acrylic resin was - 3.3°C.

Synthesis Example 9:

By using a reactor similar to that employed in Synthesis Example 7, 498.5 g of water and 10 g of sodium dodecylbenzenesulfonate were added, followed by further addition of 1.0g of ammonium persulfate and 0.5 g of sodium hydrogensulfite as polymerization catalysts. After heating the contents to 72°C, a mixture of 138.9 g of styrene monomer, 198.1 g of butyl acrylate, 140.6 g of 2-ethylhexyl acrylate monomer and 12.4 g of acrylic acid was added at a rate of 6 g per minute by means of a charging pump. Upon an elapsed time of 6 hours after the charging of the monomers, 1,000 g of a cloudy suspension of the resultant acrylic resin was obtained. The emulsion had a thickness of 49.0%, and styrene accounted for 35 mole % of all the

monomers. The emulsion will hereinafter be designated as "Sample [IX]". The $T_g$ of the resultant acrylic resin was -28.8°C.

Synthesis Example 10:

By using a reactor similar to that employed in Synthesis Example 7, 534.7 g of water and 4.0 g of sodium dodecylbenzenesulfonate were added, followed by further addition of 0.9 g of ammonium persulfate and 0.5 g of sodium hydrogensulfite as polymerization catalysts. After heating the contents to 66°C, a mixture of 58.4 g of styrene monomer, 211.8 g of butyl acrylate, 182.7 g of 2-ethylhexyl acrylate, 4.7 g of acrylamide and 2.4 g of acrylic acid was added at a rate of 8 g per minute by means of a charging pump. Upon an elapsed time of 2 hours after the charging of the monomers, 1,000 g of a cloudy suspension of the resultant acrylic resin (average particle size: 0.23 μm) was obtained. The emulsion had a thickness of 46.0% and styrene accounted for 17 mole % of all the monomers. The emulsion will hereinafter be designated as "Sample [X]". The $T_g$ of the resultant acrylic resin was -48.6°C.

Example 5:

Sample [IV] was coated as a color-developing agent on a general-purpose high-quality paper web (basis weight: 80 $g/m^2$) by a No. 10 coating roll bar

to give a solid coat weight of 5 $g/m^2$. After drying the thus-coated paper web at 80°C for 1 minute, a layer of the color-developing agent was obtained.

Sample [VII], i.e., the acrylic emulsion was coated by a No. 10 coating roll bar on the layer of the color-developing agent to give a solid coat weight of 2 $g/m^2$. The thus-coated paper web was dried at 80°C for 1 minute.

The microcapsules of Sample [V] were thereafter coated by a No. 10 coating roll bar to give a solid coat weight of 6 $g/m^2$ and the thus-coated paper web was dried at 80°C for 1 minute. By the above procedures, a test sample consisting of 3 layers, i.e., the layer of the color-developing agent, the coloring-time controlling layer and the microcapsule layer was obtained. The resultant test sample will hereinafter be designated as "Test Sample [G]".

Example 6:

Following the procedures of Example 5, the color-developing agent of Sample [IV] was coated and dried, the acrylic emulsion of Sample [VIII] was coated on the resultant layer of the color-developing agent and was dried, and the microcapsules of Sample [V] were then coated and dried. The resultant test sample will hereinafter be designated as "Test Sample [H]".

Example 7:

Following the procedures of Example 5, the color-developing agent of Sample [IV] was coated and dried, the acrylic emulsion of Sample [IX] was coated on the resultant layer of the color-developing agent and was dried, and the microcapsules of Sample [V] were then coated and dried. The resultant test sample will hereinafter be designated as "Test Sample [I]".

Example 8:

The coating and drying procedures of Example 5 were followed except for the use of the acrylic emulsion of Sample [X] instead of the acrylic emulsion of Sample [VII]. The resultant test sample will hereinafter be designated as "Test Sample [J]".

A coloring test was conducted on Test Samples [G] through [J] obtained above in Examples 5 - 8. Results of the coloring test are summarized in Table 2. The coloring test was conducted under the same conditions as the preceding coloring test the results of which are shown in Table 1.

Table 2 Results of Coloring Test

| Sample symbol | Coloring-time controlling layer | Major composition of polymer in coloring-time controlling layer | Overall dry* coat weight ($g/m^2$) | Coloring behavior |
|---|---|---|---|---|
| G | Sample [VII] obtained in Example 5 | Styrene (55 mole%)<br>Butyl acrylate | 13.2 | Coloring started upon an elapsed time of 5 minutes after heated to 15°C. 45 minutes later, colored significantly (high optical density). |
| H | Sample [VIII] obtained in Example 6 | Styrene (47 mole%)<br>Butyl acrylate | 13.2 | Coloring started upon an elapsed time of 35 minutes after heated to 15°C. 1 hour later, the optical density became high. |
| I | Sample [IX] obtained in Example 7 | Styrene (35 mole%)<br>2-Ethylhexyl acrylate<br>Butyl acrylate | 12.8 | Coloring started upon an elapsed time of 60 minutes after heated to 15°C. 3 hours later, colored significantly (high optical density). |
| J | Sample [X] obtained in Example 8 | Styrene (17 mole%)<br>Butyl acrylate<br>2-Ethylhexyl acrylate | 13.0 | Commencement of coloring was not observed although observation was continued for 12 hours after heated to 15°C. |

* (Layer of color-developing agent + coloring-time controlling layer + microcapsule layer)

Synthesis Example 11:

A stirrer was provided with a 1-ℓ round bottom flask fitted with a heating device. The flask was then charged with 502.2 g of water and 10 g of sodium dodecylbenzenesulfonate, followed by further addition of 1.2 g of potassium persulfate and 0.6 g of sodium hydrogensulfite as polymerization catalysts. After heating the contents to 70°C with gentle stirring, a mixture of 248.1 g of acrylonitrile monomer, 214.0 g of butyl acrylate monomer, 14.3 g of acrylamide monomer and 9.6 g of acrylic acid monomer was added at a rate of 5 g per minute by using a charging pump. Seven hours after the charging of the monomers, 1,000 g of a cloudy emulsion of the resultant acrylic resin (average particle size: 0.3 µm) was obtained. The emulsion had a thickness of 48.6% and acrylonitrile accounted for 70 mole % of all the monomers. The emulsion will hereinafter be designated as "Sample [XI]". The $T_g$ of the resultant acrylic resin was 13.4°C.

Synthesis Example 12:

By using a reactor similar to that employed in Synthesis Example 11, 485.5 g of water and 8 g of sodium dodecylbenzenesulfonate were added, followed by further addition of 1.0 g of potassium persulfate and 0.5 g of sodium hydrogensulfite as polymerization catalysts. After heating the contents to 75°C with

gentle stirring, a mixture of 316.1 g of styrene monomer, 83.5 g of butyl acrylate monomer, 96.0 g of 2-ethylhexyl acrylate monomer and 9.4 g of acrylic acid monomer was added at a rate of 10 g per minute by means of a charging pump. Upon an elapsed time of 5 hours after the charging of the monomers, 1,000 g of a cloudy suspension of the resultant acrylic resin (average particle size: 0.5 μm) was obtained. The emulsion had a thickness of 50.5% and styrene accounted for 70 mole % of all the monomers. The emulsion will hereinafter be designated as "Sample [XII]". The $T_g$ of the resultant acrylic resin was 20.5°C.

The acrylonitrile-containing acrylic emulsion (Sample [XI]) obtained in Synthesis Example 11 and the styrene-containing acrylic emulsion (Sample [XII]) obtained in Synthesis Example 12 were mixed together as shown in Table 3, thereby obtaining Samples K - Q.

Table 3

Test Samples Obtained by Mixing Acrylic Emulsions at Various Proportions (by solid %)

| Sample \ Sample | K | L | M | N | O | P | Q |
|---|---|---|---|---|---|---|---|
| Acrylonitrile-base emulsion Synthesis Ex. 11, Sample [XI] | 100 | 99 | 90 | 50 | 10 | 1 | 0 |
| Styrene-base emulsion Synthesis Ex. 12, Sample [XII] | 0 | 1 | 10 | 50 | 90 | 99 | 100 |

In the following Examples 9 - 15, coating and coloring tests were conducted by combining Sample [IV], each of the above Samples K to Q and Sample [V].

Example 9:

Sample [IV] was coated as a color-developing agent on a general-purpose high-quality paper web (basis weight: 80 $g/m^2$) by a No. 10 coating roll bar to give a solid coat weight of 5 $g/m^2$. After drying the thus-coated paper web at 80°C for 1 minute, a layer of the color-developing agent was obtained.

Sample L was coated by a No. 10 coating roll bar on the layer of the color-developing agent to give a solid coat weight of 6 $g/m^2$. The thus-coated paper web was dried at 80°C for 1 minute.

The microcapsules of Sample [V] were thereafter coated by a No. 10 coating roll bar to give a solid coat weight of 6 $g/m^2$ and the thus-coated paper web was dried at 80°C for 1 minute. By the above procedures, a test sample consisting of 3 layers, i.e., the layer of the color-developing agent, the coloring-time controlling layer and the microcapsule layer was obtained. The resultant test sample will hereinafter be designated as "Test Sample [A]".

Example 10:

Following the procedures of Example 9, the color-developing agent of Sample [IV] was coated and dried, Sample M was coated on the resultant layer of the color-developing agent and was dried, and the microcapsules of Sample [V] were then coated and dried. The resultant test sample will hereinafter be designated as "Test Sample [M]".

Example 11:

Following the procedures of Example 9, the color-developing agent of Sample [IV] was coated and dried, Sample N was coated on the resultant layer of the color-developing agent and was dried, and the microcapsules of Sample [V] were then coated and dried. The resultant test sample will hereinafter be designated as "Test Sample [N]".

Example 12:

Following the procedures of Example 9, the color-developing agent of Sample [IV] was coated and dried, Sample O was coated on the resultant layer of the color-developing agent and was dried, and the microcapsules of Sample [V] were then coated and dried. The resultant test sample will hereinafter be designated as "Test Sample [O]".

Example 13:

Following the procedures of Example 9, the color-developing agent of Sample [IV] was coated and

dried, Sample P was coated on the resultant layer of the color-developing agent and was dried, and the microcapsules of Sample [V] were then coated and dried. The resultant test sample will hereinafter be designated as "Test Sample [P]".

Example 14:

Following the procedures of Example 9, the color-developing agent of Sample [IV] was coated and dried, Sample K was coated on the resultant layer of the color-developing agent and was dried, and the microcapsules of Sample [V] were then coated and dried. The resultant test sample will hereinafter be designated as "Test Sample [K]".

Example 15:

Following the procedures of Example 9, the color-developing agent of Sample [IV] was coated and dried, Sample Q was coated on the resultant layer of the color-developing agent and was dried, and the microcapsules of Sample [V] were then coated and dried. The resultant test sample will hereinafter be designated as "Test Sample [Q]".

A coloring test was conducted on Test Samples [K] - [Q] obtained above in Examples 9 - 15 respectively. Results of the coloring test are summarized in Table 4. The coloring test was conducted

under the same conditions as the preceding coloring test the results of which are shown in Table 1.

Table 4 Results of Coloring Test

| Sample symbol | Composition of coloring-time controlling layer: Mixing proportions of acrylic emulsions (solid %) | | Overall dry* coat weight ($g/m^2$) | Coloring behavior |
|---|---|---|---|---|
| | Synthesis Example 11 (Sample [XI] -acrylonitrile) | Synthesis Example 12 (Sample [XII] - styrene) | | |
| L | 99 | 1 | 13.6 | Coloring started upon an elapsed time of 14 hours after heated to 15°C. 20 hours later, colored significantly (high density). |
| M | 90 | 10 | 12.9 | Coloring started upon an elapsed time of 9 hours after heated to 15°C. 15 hours later, colored significantly (high density). |
| N | 50 | 50 | 13.3 | Coloring started upon an elapsed time of 3 hours after heated to 15°C. 9 hours later, colored significantly (high density). |
| O | 10 | 90 | 13.3 | Coloring started upon an elapsed time of 10 minutes after heated to 15°C. 30 minutes later, colored significantly(high density). |

* (Layer of color-developing agent + coloring-time controlling layer + microcapsule layer)

Table 4 (Cont'd) Results of Coloring Test

| Sample symbol | Composition of coloring-time controlling layer<br>Mixing proportions of acrylic emulsions (solid %)<br>Synthesis Example 11 (Sample [XI] - acrylonitrile) | Composition of coloring-time controlling layer<br>Mixing proportions of acrylic emulsions (solid %)<br>Synthesis Example 12 (Sample [XII] - styrene) | Overall dry* coat weight ($g/m^2$) | Coloring behavior |
|---|---|---|---|---|
| P | 1 | 99 | 12.8 | Coloring started upon an elapsed time of 1 minutes after heated to 15°C. 5 minutes later, colored significantly (high density). |
| K | 100 | 0 | 13.5 | Commencement of coloring was not observed although observation was continued for 15 hours after heated to 15°C. |
| Q | 0 | 100 | 12.9 | Commencement of coloring was observed while heating to to 15°C. 10 minutes later, colored significantly (high density). |

* (Layer of color-developing agent + coloring-time controlling layer + microcapsule layer)

Claims:

1. A coloring-time controlling layer suitable for application between [A] a layer containing microcapsules of an oily substance and [B] another layer containing a substance capable of inducing coloring upon contact with the oily substance, characterized in that said coloring-time controlling layer comprises a film obtained by drying an emulsion of a polymer which contains styrene and/or acrylonitrile as constituent unit(s).

2. A coloring-time controlling layer according to Claim 1, wherein the polymer contains styrene in a proportion of 30 mole % or higher.

3. A coloring-time controlling layer according to Claim 1 or 2 wherein the polymer contains acrylonitrile in a proportion of 30 mole % or higher.

4. A coloring-time controlling layer according to any preceding claim wherein the emulsion is a mixture of (a) an emulsion of a polymer containing acrylonitrile and (b) another emulsion of a polymer containing styrene.

5. A coloring-time controlling layer according to Claim 4, wherein the mixing ratio of the emulsion (a) to the emulsion (b) is in a range of from 99:1 to 1:99 by weight on solid bases.

6. A coloring-time controlling layer according to any preceding claim wherein the layer [A] contains microcapsules of a hydrophobic organic compound having a desired melting point and a methine-type dyestuff precursor or oxidizing substance as the oily substance, and the layer [B] contains an oxidizing substance or methine-type dyestuff precursor as the coloring-inducing substance.

7. A coloring-time controlling layer according to any of claims 1-5, wherein the layer [A] contains microcapsules of a hydrophobic organic compound having a desired melting point as the oily substance, and the layer [B] contains a methine-type dyestuff precursor and an oxidizing substance as the coloring-inducing substance.

8. A temperature-control indicator unit comprising the coloring-time controlling layer according to Claim 6.

9. A temperature-control indicator unit comprising the coloring-time controlling layer according to Claim 7.